(19) Europäisches Patentamt / European Patent Office / Office européen des brevets

(11) **EP 4 116 766 B1**

(12) **EUROPEAN PATENT SPECIFICATION**

(45) Date of publication and mention of the grant of the patent:
**01.05.2024   Bulletin 2024/18**

(21) Application number: **21305949.6**

(22) Date of filing: **09.07.2021**

(51) International Patent Classification (IPC):
**G02F 1/29** (2006.01)        **G02F 1/13** (2006.01)

(52) Cooperative Patent Classification (CPC):
**G02F 1/29; G01S 7/4817; G02F 1/13;**
G02F 2203/24

(54) **FAST ACTIVE BEAM-STEERING DEVICE AND APPARATUS OPERATING IN TRANSMISSION MODE**

VORRICHTUNG UND EINRICHTUNG ZUR SCHNELLEN AKTIVEN STRAHLLENKUNG MIT BETRIEB IM ÜBERTRAGUNGSMODUS

DISPOSITIF D'ORIENTATION DE FAISCEAU ACTIF RAPIDE ET APPAREIL FONCTIONNANT EN MODE DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.01.2023   Bulletin 2023/02**

(73) Proprietors:
• **Centre national de la recherche scientifique**
  **75016 Paris (FR)**
• **Université Côte d'Azur**
  **06103 Nice Cedex 2 (FR)**

(72) Inventors:
• **KYROU, Christina**
  **06160 Antibes (FR)**
• **GENEVET, Patrice**
  **06130 Grasse (FR)**
• **KHADIR, Samira**
  **06600 Antibes (FR)**
• **MARTINS, Renato Juliano**
  **06600 Antibes (FR)**

(74) Representative: **IPAZ**
**Bâtiment Platon**
**Parc Les Algorithmes**
**91190 Saint-Aubin (FR)**

(56) References cited:
**US-A1- 2013 063 691      US-A1- 2020 303 827**

• **LI SHI-QIANG ET AL: "Phase-only transmissive spatial light modulator based on tunable dielectric metasurface", SCIENCE, vol. 364, no. 6445, 14 June 2019 (2019-06-14), pages 1087-1090, XP055779283, US ISSN: 0036-8075, DOI: 10.1126/science.aaw6747**

**Description**

The invention relates to a beam-steering apparatus operating in transmission mode at high speed (in the range between 100 kHz and several MHz). It applies in particular, but not exclusively, to the field of LiDAR (Light Detection and Ranging).

Imaging systems based on the LiDAR (Light Detection and Ranging) technology enable the dynamic sensing of the ranging distance of fast-moving objects and can be considered as the key technology for the autonomous vehicles. LiDARs usually employ beam steering devices which enable to send a beam of light to any arbitrary direction to spatially scan a large angular field-of-view (FoV) with high speed and strong efficiency. Current beam steering devices operating either in reflection or in transmission mode, encompass among others mechanical laser scanners, integrated Optical Phased Arrays (OPAs), Micro-electro-mechanical systems (MEMS) deflectors, Acousto-optic (AO) and Liquid Crystal (LC) modulators. Each of these technologies has its own advantages and limitations. For instance:

- Mechanical laser scanners have a large FoV, but the use of mechanically moving parts make them slow, bulky, complex and vulnerable to mechanical failures.
- integrated OPAs, based on waveguide arrays, offer high scanning frequencies (of the order of MHz) and moderate FoVs (within 20 to 50 deg), but they are complex and limited to low output optical powers due to insertion loss.
- AO deflectors also offer high modulation frequencies, of the order of MHz, but are limited to small deflection angles (usually <2deg) and limited efficiency of around 70%.
- MEMS modulators have acceptable FoV (within 20-60deg.) but are quite slow for LiDAR applications (scanning frequencies in the kHz range) and only operate in reflection mode, which provides less flexibility in terms of device integration.

Phase or amplitude LC modulators are particularly promising as they can operate in transmission mode. Moreover, these are lightweight, they operate with low control voltages (a few volts) and they can be integrated on-chip. However, commercially available LC modulators have limited potentiality for LiDAR applications because of their slow scanning frequencies in the range of kHz regime, as well as the not entirely satisfactory optical efficiency for large deflection angles due to high-order diffraction effects and relatively low FoV. [Kim 20] describes a state-of-the art LC beam-steering device operating in transmission mode.

Current light deflectors based on nematic LCs (or NLCs) exploit the ability of these materials to adapt their optical properties to external stimuli including temperature, electromagnetic fields, and mechanical stresses. Particularly, the application of an electrical voltage can induce a controllable phase retardation to the transmitted beam, required to deflect the light from its initial direction. NLCs consist of positionally disordered elongated molecules which are statistically oriented along a common macroscopic axis of symmetry (i.e. the N-director). NLCs exhibit physical properties dependent on the orientation but remain highly viscous as the ordinary liquids. When a NLC of positive (negative) dielectric anisotropy is confined between two electrodes, a voltage application causes bulk elastic deformations leading to collective rotations of the LC molecules along (perpendicularly) to the electric field direction. A uniform NLC reorientation requires a perfectly aligned LC prior to the voltage application. The latter is achieved when the LC is placed at the vicinity of a solid surface which is mechanically or (photo-)chemically treated to control its orientation at the interface via the so called "anchoring effect". The LC reorientation occurs to minimize the LC free energy resulting from the competition between the electrical and the anchoring forces. LC molecules exhibit uniaxial birefringence in the range 0.05-0.45, with an optical axis aligned with the longitudinal axis of the molecules.

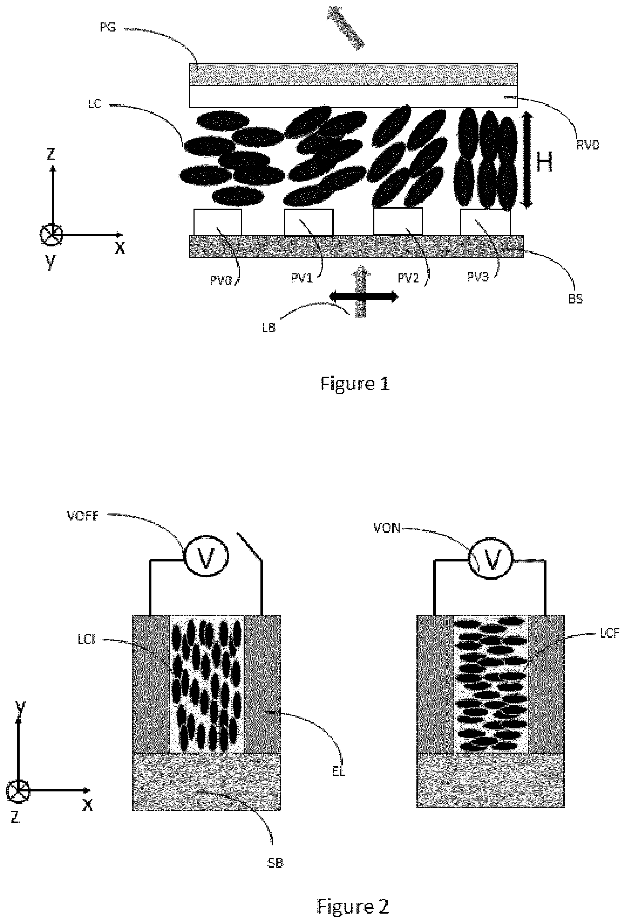

As illustrated on Figure 1, conventional LC modulators use micrometric NLC layers (reference LC modulator) confined between planar transparent electrodes. The bottom electrode, supported by a dielectric bottom substrate BS, is usually pixelated with a micrometric pitch (pixels $PV_0$, $PV_1$, $PV_2$, $PV_3$, aligned along a "x" direction), while the top electrode RV0 is kept at a reference voltage $V_0$. A protective glass PG may also be present above the top electrode. On the example of Figure 1, pixel $PV_0$ is kept at voltage $V_0$, therefore no electric field acts on the LC molecules, which remains aligned in the "x" direction parallel to the planar electrodes due to the existence of alignment layers that induce an initial (no-voltage) alignment along the x-direction; pixels $PV_1$, $PV_2$ and $PV_3$ are kept at increasing voltages $V_1$, $V_2$, $V_3$, resulting in electric fields of increasing intensity which induce a gradual rotation of the LC molecules as a function of the pixel. For high voltage, like in pixel $PV_3$, the LCs of positive dielectric anisotropy are aligned along the "z" direction, perpendicular to the planar electrode. A beam of light LB propagating along the "z" direction and polarized along the "x" direction which impinges on the bottom electrode experiences a refraction index which decreases stepwise from $n_e$ (extraordinary index) in $PV_0$ to $n_o$ (ordinary index) in $PV_3$, resulting in deflection of the beam.

By considering a NLC compound of optimal dielectric and visco-elastic properties for fast field-induced reorientation, the response time $\tau$ of the LC modulator to an electric field is mainly dictated by the thickness (H) of the LC layer confined between the two electrodes. To address $2\pi$ phase shift necessary for full wavefront manipulation, the LC thickness H cannot be smaller than $\lambda/\Delta n$, with $\Delta n = n_e - n_o$ being the LC birefringence. As a result, for those conventional NCL, $\tau$ is of the order of few milliseconds. Moreover, for LC-modulators operating in the visible range, the separation of the pixelated electrodes by a spacing much larger the incident wavelength leads not only to weak deflection angles but also to higher diffraction orders that negatively affect the device efficiency. Fringe effects at the boundaries of adjacent pixels further increases the amount of light directed to higher diffraction orders.

Metasurface-based transmissive light deflectors create a gradient of refractive index by employing high refractive index dielectric optical elements of subwavelength size and spacing whose lateral dimensions are gradually varying along one direction but their thickness is large enough (~1μm), as required to support propagative modes. The latter leads to a generalized law of refraction and any deflection angle can be achieved by properly adjusting the phase discretization levels provided by each metasurface repeated unit [Yu11]. The subwavelength topography of metasurfaces suppresses the higher diffracted orders offering high deflection efficiencies and large deflection angles (above 60deg.). The main limitation of metasurface-based deflectors is that they are designed and fabricated once and for all to deflect along a pre-decided and fixed angle, serving essentially as passive optical elements. It has been proposed to make tunable metasurfaces by using them in conjunction with LC. For instance, US 2020/0303827 discloses a light deflector operating in reflecting mode based on a metasurface formed by conducting rectilinear nano-antennas of sub-wavelength width and spacing. A LC fills the spaces between nano-antennas. A voltage applied between adjacent nano-antenna controls the orientation of the LC molecules, and therefore the electromagnetic environment of the nano-antennas. It has been demonstrated that this allows controlling the deflection angle. A drawback of this approach is that it only allows reflection-mode operation, which is sometimes unpractical in terms of integration and limits the maximum achievable optical efficiency.

[Li19] describes another architecture for a tunable metasurface, comprising dielectric nanopillars surrounded by a liquid crystal whose orientation is controlled by a voltage applied between a top and a bottom electrode. This architecture allows beam-steering in transmission mode, but its performances are not entirely satisfactory: the FoV does not exceed ±11°, optical efficiency is of the order of 35% and the scanning frequency is only slightly larger than for a conventional LC modulator.

The invention aims at overcoming, in full or in part, these drawbacks of the prior art. More particularly it aims at providing an integrated beam-steering apparatus operating in transmission mode at high speed, with high optical efficiency and achieving a wide FoV (several degrees, or tens of degrees).

According to the invention, these aims are achieved by positioning elongated transparent electrodes at subwavelength distances, one with respect to its neighbor. It results in an ensemble of subwavelength gaps, or "grooves", that are infiltrated with NLC and that can be individually actuated by applying a potential difference to induce NLC reorientation within the gap. This approach has several advantages: the resulting subwavelength topography of the metasurface leads to the NLC subwavelength nanostructuration suppressing then the higher diffracted orders and thus offering high deflection efficiencies; the vertical electrodes separating the cells avoid fringing effects; the small distance between electrodes reduces the response time of the LC.

It is worth stressing the differences between the present invention and the teaching of US 2020/0303827. In the device of US 2020/0303827, the vertical electrodes act as resonant nano-antennas and the LC constitute their - tunable - dielectric environment, whose interaction with the nano-antennas determines the phase-shift of reflected light. In the invention, the vertical electrodes behave as simple transparent dielectric slabs with respect to optical radiation, which only undergoes a phase shift when it is confined in the LC, by exploiting the working principle of a conventional LC modulator.

An object of the present invention is a beam-steering device according to claim 1.

Another object of the invention is a beam-steering apparatus according to claim 9.

A further object of the invention is an optical system according to claim 10.

Particular embodiments of the invention constitute the subject-matter of the dependent claims.

Additional features and advantages of the present invention will become apparent from the subsequent description, taken in conjunction with the accompanying drawings, wherein:

- Figure 1, already discussed, illustrates the structure and operation principle of a LC beam-steering device according to the prior art;
- Figure 2 illustrates the reorientation of NLC under the influence of an electric field for vertical initial (voltage OFF) alignment of the LC molecules;
- Figure 3 shows the change in the NLC refractive index experienced from x-polarized light, resulted from a full 90° reorientation;
- Figure 4 illustrates a periodic pattern of 2π phase shifting elements forming a "supercell", allowing efficient deflection of an incident light beam ;
- Figure 5 shows a side view of an isolated 2π supercell providing four (4) phase discretization levels by adjusting the refractive index of the four NLC cells located between successive transparent vertical electrodes to convert the incident beam IB to the deflected beam DB ;
- Figure 6 is a schematic representation of the device (top-view) including the device active area comprised of periodically repeated alternating transparent electrodes and LC cells, the printed ohmic contacts and the driving circuit boards.
- Figure 7 A presents a plot showing the difference in the effective refractive index of a single hybrid electrode-NLC pixel before the voltage application and for the maximum voltage-induced reorientation, as a function of the electrode filling factor (ff) per pixel. The gray-scale color maps Figure 7 B are the near electric field distributions illustrating the optical mode confinement into the different pixel contributions (i.e. NLC and the high index electrode respectively) for electrode ff 5% and 50% per total pitch P.

- Figure 8 is the phase map obtained by two-dimensional finite-difference time-domain (2D FDTD) simulations for a single hybrid pixel as swiping the NLC rotation angle $\theta$ and the transparent electrode width W (GaN has been considered for the simulation but any other transparent and conductive material could be considered). A ~$2\pi$ phase shift is obtained when W~100nm or lower. The value of W leading to $2\pi$ phase shift would be modified using another electrode material.

- Figure 9 is the transmission map obtained by two-dimensional finite-difference time-domain (2D FDTD) simulations for a single hybrid pixel as swiping the NLC rotation angle $\theta$ and the transparent electrode width W (GaN has been considered). A transmission close to unity (1) is obtained when W~100nm or lower.

- Figure 10 illustrates how the deflection angle depends on the number of phase levels (M) forming a pattern of the type illustrated by Figure 4;

- Figure 11 illustrates the dependency of the device efficiency on the deflection angle; and

- Figure 12 is a scheme of a bi-dimensional beam-steering apparatus according to an embodiment of the invention.

In the following description "light" designates electromagnetic radiation in the mid-infrared (3 $\mu$m - 50 $\mu$m), near infrared (780 nm - 3 $\mu$m), visible (380 nm - 780 nm) or near ultraviolet (200 nm - 380 nm). Similarly, "optical wavelengths" include mid-infrared (3 $\mu$m - 50 $\mu$m), near infrared (780 nm - 3 $\mu$m), visible (380 nm - 780 nm) and near ultraviolet (200 nm - 380 nm) wavelengths. Unless specified otherwise, wavelengths are measured in vacuum.

A physical body will be considered "transparent" at a given wavelength if its transmission coefficient at said wavelength is not lower than 0.9.

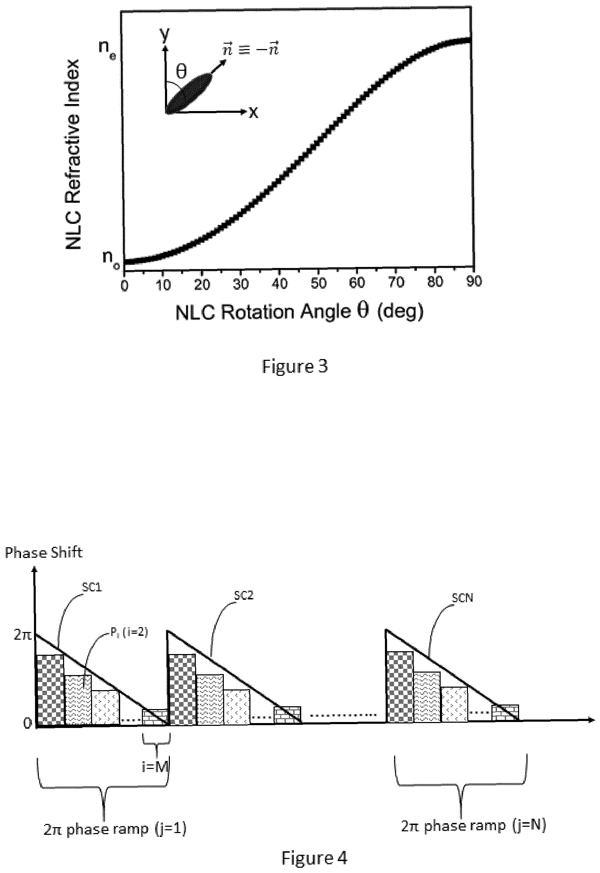

Figure 2 illustrates the full electrical reorientation of a NLC of positive dielectric anisotropy between two vertical, conductive, and transparent rectangular electrodes EL (side view) forming grooves, described by the configurations LCI and LCF. When no voltage is applied between the electrodes (VOFF), a LC aligned normally to the sub-wavelength grooves designed on a substrate SB is considered (i.e. NLC director along y direction),. The application of high electric field (nonzero voltage VON) results in a 90° out-of-plane NLC reorientation along its direction between the voltage-off (VOFF) and the voltage-on (VON). VON state corresponds to the maximum electric applied field. Figure 3 shows that the NLC refractive index varies smoothly between $n_o$ and $n_e$ when the rotation angle of the NLC molecules varies between 0° (LCI configuration) and 90° (LCF configuration).

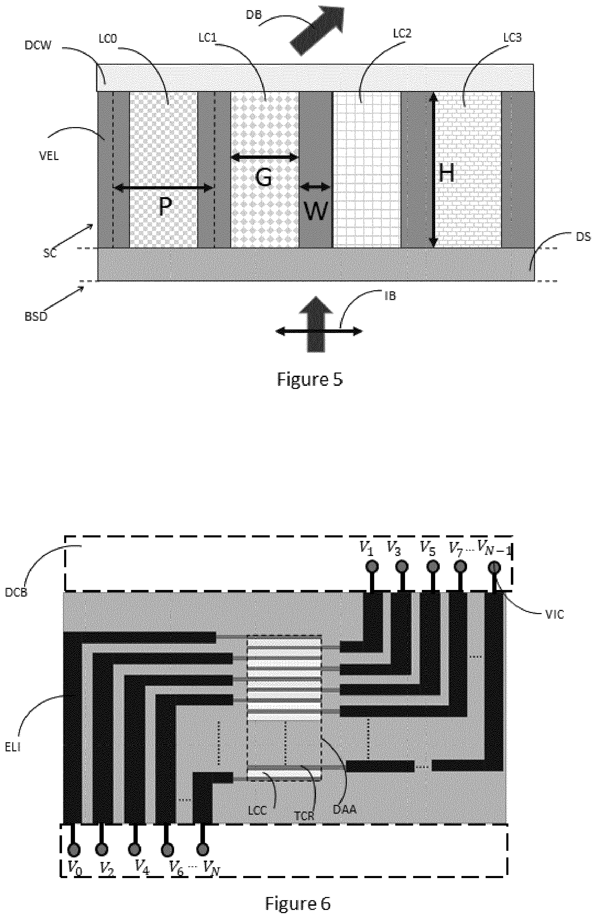

Figure 5 illustrates a portion SC (called a "supercell" for reason which will be explained later with reference to figure 4) of a beam-steering device BSD according to an embodiment of the invention comprises a dielectric substrate DS and a dielectric cover window (DCW), transparent at least at one optical wavelength, $\lambda$. For instance, they may be made of sapphire ($Al_2O_3$). DS and DCW have planar parallel surfaces, facing each other at a distance at minimum equivalent to the thickness H of the transparent vertical electrodes (VEL), that is, in the micrometer range. Hereafter, the x and z directions parallel to the faces of the substrates will be called "horizontal" direction and direction y, perpendicular to the faces of the substrate, and along the electrode thickness H, will be called vertical.

A plurality (five on Figure 5) of conducting rails - or vertical electrodes VEL extend vertically from the upper surface of lower substrate DS to the lower surface of upper DCW. Said conducting rails also extend - preferably rectilinearly - in the z (or "longitudinal") direction, thus subdividing the space between the two substrates into a one-dimensional array of elongated cells (or one-dimensional pixels) arranged along the x direction, which are filled with a nematic liquid crystal denoted as LC0-LC3. The conducting rails are transparent at least at said optical wavelength $\lambda$; for instance, they may be made of highly Si doped (~$10^{20}$ cm$^{-3}$) GaN epitaxially grown on DS. The length of the rails may extend to several hundreds of microns or more.

A whole beam-steering device BSD is typically composed of a plurality of adjacent supercells.

The pitch P of the conducting rails - defined as the width (measured in the x direction) of one cell plus the width W (also measured in the x direction) of one conducting rail - shall be smaller than wavelength $\lambda$. For instance, in the visible range P may be between 200 nm and 500nm while in the near-infrared it may extend at around 2 $\mu$m. The array of cells need not be strictly periodic; otherwise stated, its pitch may vary along the x direction.

The aspect ratio H/W of the conducting rails is typically greater than 10, for instance of about 15 depending on the birefringence of the NLC and the wavelength of the incident light.

The dimensioning of device BSD - is particularly defined by the three parameters H, P and W.

As illustrated in Figure 6, electrical interconnections ELI can be individually connected from the one side at each transparent conducting rail TCR and from the other side to a respective port of a driving circuit board DCB (e.g. an integrated circuit) which is configured for applying an electric potential $V_0$, $V_1$, ...., $V_{N-1}$, $V_N$ to the rail voltage input channel VIC and accordingly re-orient the successive LC cells LCC located in the device active area DAA. The electrical interconnections may be made of any conducting material suitable for ohmic contacts, for instance, copper or gold paths on a printed circuit board contacting the conducting rails at one of their ends. Modern electronics technology makes the realization of such a dense interconnection pattern feasible. For instance, UV-lithography can be employed to design a specific interconnection pattern that fits the active area of the device that may be fabricated by electron-beam lithography (or deep UV lithography or nano-imprinting lithography), followed by electron beam metal evaporation, lift-off process and ICP-RIE (inductive coupled plasma - reactive ion etching) etching. One or more DCB may be considered, according to the exact design of the ELI. The driving circuits may be printed directly on-glass or connect to the device as external panels (out-of-glass). A driving algorithm may be used to regulate the desired voltage pattern provided by the successive electrodes,

When the two conducting rails confining a single NLC cell are kept at different electric potentials, an electric field which modifies the orientation of the liquid crystal molecules is generated in the cell and the NLC reorientation changes the extraordinary effective refractive index experienced by a light beam IB propagating through the device with a propagation direction exactly or approximately aligned with the y axis and linearly polarized in the x direction. However, the ordinary refractive index is not affected by the reorientation. This configuration has several advantages compared to the conventional one illustrated on Figure 1:

- Considering a particular NLC compound and for a given potential difference and anchoring strength, the LC switching time is proportional to $G^2=(P-W)^2$, which is much smaller than $H^2$, resulting in faster operation - typically be one or two orders of magnitude, leading to approximately 100kHz -1 MHz LC reorientation frequency.
- Adjacent cells are separated by hard wall, avoiding loss-inducing fringing effects.
- The subwavelength geometry of the cells in the x direction suppresses the higher diffracted orders offering high deflection efficiencies. Indeed, the inventive device can be considered an electrically tunable metasurface.
- For visible optical wavelengths, the nanoscale confinement of the LC molecule ensures their high-quality, homogeneous alignment before the application of an electric field. An associated drawback is that the same nanoscale confinement induces strong anchoring forces which requires large electric fields to be overcome, but the lower the pitch, the larger the electric field for a given potential difference. Depending on the geometric parameters of the transparent and conductive metasurface, the physical properties (dielectric, visco-elastic) of the LC and the strength of interfacial interactions between the LC and the underlying metasurface, a voltage value in the range of 1-10 V is adequate for the LC activation.

For the "electric field - off state" the liquid crystal molecules may be oriented along the y direction. This initial (VOFF) alignment condition, normal to the grooves plane, may be achieved by controlling the interfacial interactions between the LC molecules and the transparent electrodes as well as the geometrical parameters of the conducting and transparent metasurface (for instance the aspect ratio of the electrodes). An alignment layer may cover the DS and DCW upper and lower surface respectively to force the vertical or other alignment. The latter can be realized by employing conventional alignment techniques such as photoalignment and/or chemical alignment. By gradually increasing the voltage difference between two neighboring conducting rails, and therefore the strength of the electric field in the x direction, a controllable out-of-plane (i.e. in the yx plane) reorientation of the LC optic axis be may induced by considering a NLC of positive dielectric anisotropy. This causes a progressive change of the refractive index $n_{LC}$ experienced by light propagating in the y-direction and polarized in the x-direction. More precisely, the refraction index $n_{LC}$ progressively increases from $n_0$ (ordinary index) to $n_e$ (extraordinary index):

$$n_{LC}(\theta) = \frac{n_o n_e}{\sqrt{n_e^2 cos^2\theta + n_o^2 sin^2\theta}}$$

where $\theta$ is the angle formed by the optical axis of the LC molecules and the wave-vector of the incident light, which in turn is an increasing function of the absolute value of the electric field strength in the x direction. It can easily be seen that $n_{LC}(0°)=n_o$ and $n_{LC}(90°)=n_e$.

Figure 3 is a plot of the change of the LC (with positive dielectric anisotropy) refractive index experienced by x-polarized light, as a function of the LC out-of-plane rotation angle induced by the external electrical voltage (i.e. the potential difference) between the two conducting rails delimitating a cell of the beam-steering device. Depending on the anchoring condition at the NLC-electrode interface prior to the voltage application and the sign of the dielectric anisotropy of the NLC, different in-plane or out-of-plane reorientation configurations may be considered. For instance, if the initial alignment is along the z-direction, a LC of negative dielectric anisotropy may be chosen as a tunable material. Another example is to consider in-plane reorientation of molecules of positive dielectric anisotropy aligned along the grooves axes (i.e. along z-direction) prior to the voltage application. The initial (VOFF) alignment condition, the NLC reorientation mechanism and the sign of the NLC dielectric anisotropy must be accounted accordingly for phase-only and/or amplitude modulation. Generally, NLCs of negative dielectric anisotropy are not highly preferred options for phase-only modulation due to their low dielectric anisotropy values compared to the NLC molecules with positive dielectric anisotropy. Low dielectric anisotropy will increase the LC response time to an applied electrical voltage.

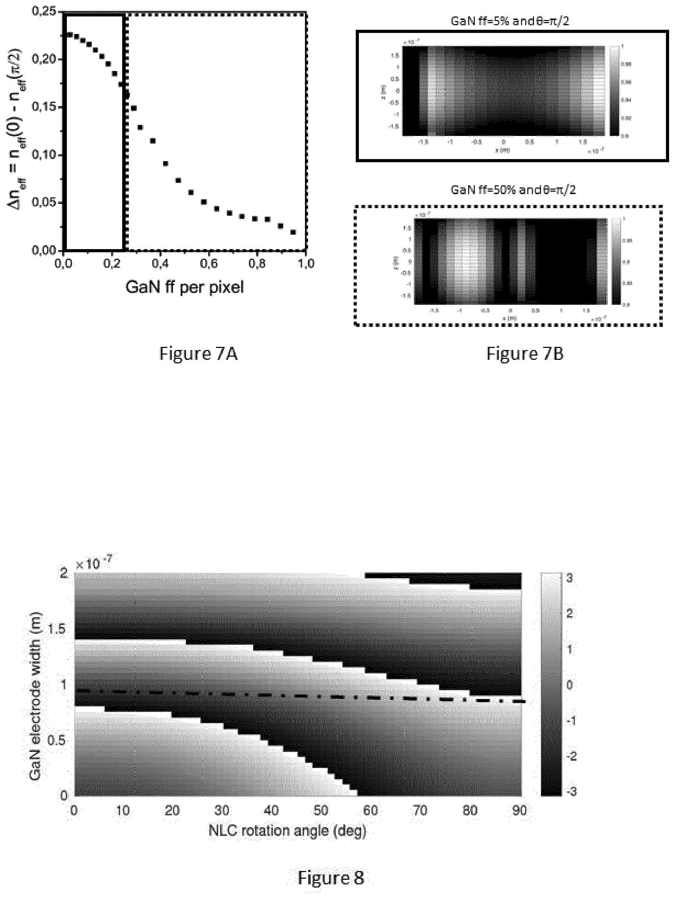

If the conducting rails had a negligible width (W $\rightarrow$ 0), then the minimum thickness H of the cells would be given by $\lambda/\Delta n$, with $\Delta n = n_e - n_o \sim 0.2 - 0.4$ for most common LC, to allow a full $2\pi$ phase retardation. In fact, usually W is not negligible due to the limitations induced by the conventional nanofabrication methods including for instance electron-beam and nanoimprinting lithography. Thus the effective index $n_{eff}$ of then hybrid metasurface forming the device can be considered as a weighted average of $n_{LC}(\theta)$ and of the refraction index of the conducting rails, which is independent from the applied potentials. As a consequence the maximum achievable variation of the effective index $\Delta n_{eff}$ is smaller than $\Delta n$. This observation is critical to the invention, as it is not evident, a priory, to avoid electromagnetic confinement in the transparent electrodes. Electromagnetic simulations allow computing the dependence of $\Delta n_{eff}$ with respect to the rail filling factor of the cell W/P. Figures 7 and 8 show the results of such a computation for a nematic LC with $\Delta n=0.23$ ($n_o=1.51$ and $n_e=1.74$ at 650 nm) and GaN ($n_{GAN}=2.38$ at 650 nm) conducting rails grown on a sapphire substrate, $\lambda=650$ nm and P=380 nm. It can be seen that for a GaN filling factor of 25% (i.e. W=95 nm) or smaller the LC pixel contribution enables beam steering,

Note that confined electromagnetic modes can only exist if the pitch of the structure is not too small compared to the wavelength. Ideally, P should be of the order of half the operating wavelength in the material, with a tolerance X, usually not exceeding $\pm0.4\lambda$ (i.e. 40%), preferably $\pm0.2$ (20%) and even more preferably $\pm0.1$ (10%), to account for both the fabrication feasibility of the lateral dimension of the solid metasurface and the LC anchoring strength control at its interfaces with the metasurface. The latter should be carefully considered if the device operates within the visible wavelength range.

It can be seen in Figure 7 that $\Delta n_{eff}$ does not depend linearly on the GaN filling factor ff. Indeed, the modal distribution of electromagnetic radiation in the device must be considered. As seen in Figures 7A and 7B, for small GaN filling factors (5% in the example of Figure 7A) the electric field modes are mainly confined in the LC and $\Delta n_{eff} \approx \Delta n$; for large GaN filling factors (50% in the example of Figure 7B) the modes are mostly confined in the conducting rails and $\Delta n_{eff} << \Delta n$. The latter situation should be avoided to achieve $2\pi$ phase retardation as it would require fabricating structures with extremely challenging aspect ratio. A threshold value for the filling factor can be defined at approximately 25%. The latter value may change by considering different degrees of refractive index contrast between the LC and the underlying transparent and conductive structure.

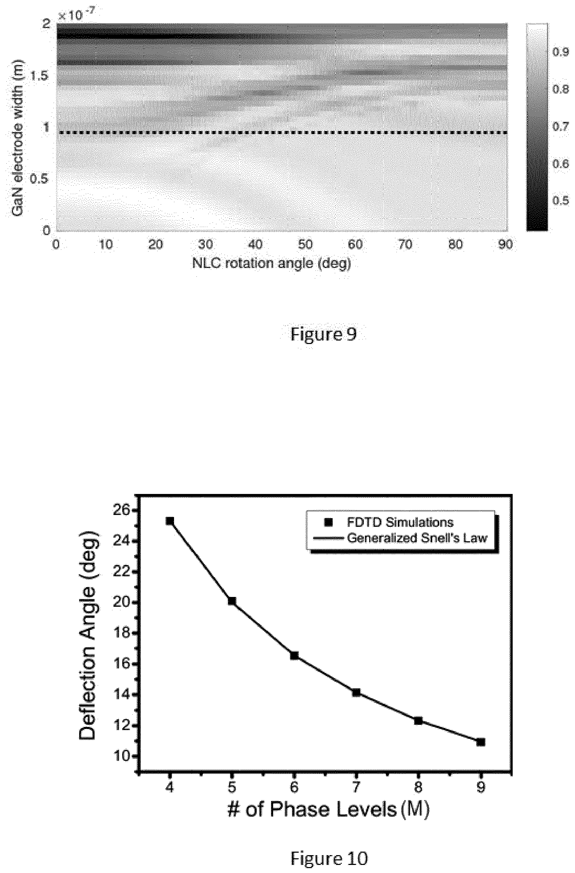

As illustrated on figure 4, an optical phase shift equal to $2\pi$ may be introduced by phase gradient supercells SC1, SC2...SCN designated by an integer index j which increases in the x direction. Each supercell has the structure illustrated on figure 5 and comprises M pixels (M=4 in the present example) designated by an integer index i also increasing in the x direction. The $i^{th}$ pixel $P_i$ of a generic supercell j introduces a phase shift $\Delta\phi_i=(2\pi i/M)=id\phi_M$ where $d\phi_M=2\pi/M$, resulting in a discretized phase ramp from 0 to $2\pi$ over a distance $P \cdot M$, P being the pitch of one hybrid pixel. The repetition of identical supercells results in a periodic "sawtooth" pattern of period $P \cdot M$. As shown on Figure 10, the maximum efficient deflection of the normally incident light beam is achieved with M=4 phase level, and decreases for increasing values of M. The angular resolution - i.e. the minimum nonzero deflection - of a device comprising M individually-addressable and periodically repeated pixels is $\theta min=\sin^{-1}(\lambda/MP)$. The maximum deflection angle is given by $\theta max=\sin^{-1}(\lambda/4P)$. For cells having a 380 nm pitch and operating at $\lambda=650$ nm, $\theta max \approx \pm 25°$, resulting in a FoV of about 50°. As it can be deduced from Figure 7A a GaN ff of 25% corresponds to a $\Delta n_{eff} \sim 0.17$ and thus lower than the considered NLC birefringence $\Delta n \sim 0.23$, in such a case the deflecting operation of the device for a height $H \sim \lambda/\Delta n$ can be ensured by considering at least four (4) phase discretization levels. For fabrication convenience, the phase discretization allows reduced cell thickness H to $H \sim \lambda(2\pi-d\varphi_i)/2\pi\Delta n_{eff}$.

On Figure 10, the black squares correspond to the results of 2D FDTD simulation of a 45.6$\mu$m long device along x-direction and a normally incident plane wave polarized along the device periodicity direction. The continuous line corresponds to a theoretical calculation performed using the "generalized Snell law" of [Yu 11]. The very good agreement between the results confirms that the inventive device actually behaves as a NLC metasurface.

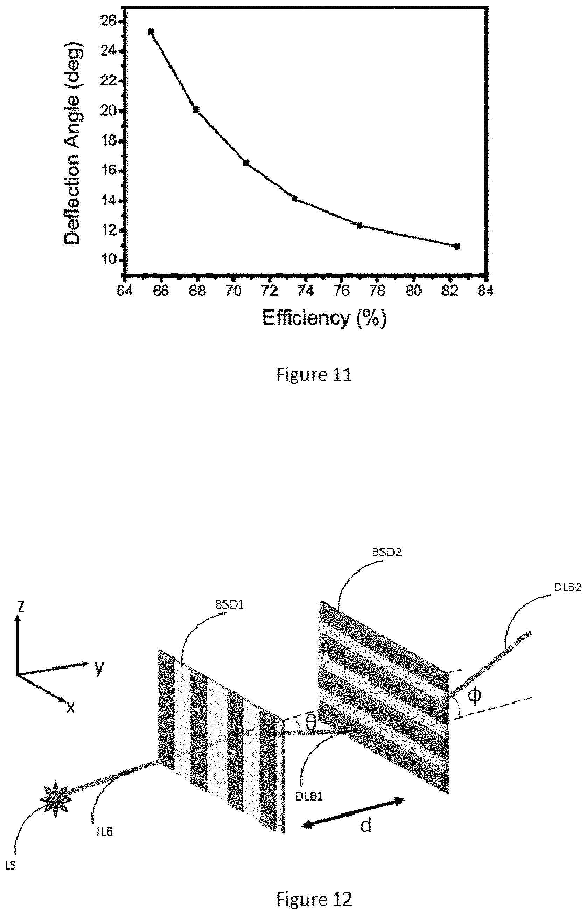

Figure 11 shows that the optical efficiency (computed using the 2D FDTD method) reaches 85% and decreases for increasing deflection angles but even at $\theta max \approx \pm 25°$ retains a rather satisfactory value of -65%, in general around three times larger than the efficiency achieved by devices operating in the reflection mode. An optimization algorithm that enables the local voltage adjustment to improve the efficiency provided for the highest deflection angles may be incorporated to the driving algorithm of the deflector. The latter may be also used to compensate for the design imperfections resulted from the employed fabrication processes.

Due to their ability to operate in transmission mode and their high efficiency (Figures 9 and 11), two beam-steering devices according to the invention whose conducting rails have non-parallel (and preferably perpendicular) directions can be associated to achieve two-dimensional beam-steering. Figure 12 shows an optical system comprising a light source LS (for instance, a semiconductor laser provided with collimating optics) generating an incident light beam ILB propagating along a direction y which polarized along x direction and directed to a two-dimensional beam-steering apparatus BSA. The two-dimensional beam-steering apparatus BSA comprises a first beam-steering device BSD1 whose conducting rails are aligned in the z direction, to deflect beam ILB by an angle θ in the xy plane, and a second beam-steering device BSD2, separated from BSD1 by a distance d along the y direction, whose conducting rails are aligned in the x direction, to deflect beam DLB1 by an angle φ to DLB2 in the yz far-field plane. The design of the cascaded bi-dimensional beam steering system is non-trivial because of the polarization dependent response of the LC with respect to their specific anchoring configuration. The user has to make technological choices - for instance, using LC with positive or negative anisotropy, choosing the LC reorientation mechanism,... - determining the initial anchoring direction at zero volt and the relative groove orientation of BSD1 and BSD2 and selecting the incident polarization in order to achieve a predetermined deflection in two-dimensions.

Often, the designer will seek to avoid birefringent splitting of the light beam. This can be obtained by choosing the input polarization and incident angles of light impinging on each modulator in order to maximize the deflection efficiency at the each modulator. More particularly, in this case, the incident polarization on BSD1 has to be chosen to maximize the refractive index variation upon LC reorientation. Let us consider, for instance, a first modulator BSD1 comprising an electrically tunable out-of-plane LC reorientation with the NLC molecules anchoring normally to the grooves plane at the voltage-off state and having positive dielectric anisotropy. In this case the incident polarization must be perpendicular to the groove axis. The design of BSD1 and incident polarization inform on the design and LC type to be selected for BSD2. Since the extraordinary refractive index is sensitive to the voltage application, the incident light to BSD2 needs be polarized in the same plane as the NLC optic axis in BSD2. Let us consider for instance that grooves of BSD2 are at 90° with respect to those BSD1, implying an initial NLC orientation said normal or parallel to their axes. By considering that the incident polarization on BSD2 is the one that maximizes deflection after BSD1 as previously described, the reorientation mechanism in BSD2 has to be chosen so as to maximize the defection efficiency after BSD2. For example, if out-of-plane reorientation takes place at BSD2, the non-normally incident light impinging on it must have one polarization projection that will be experienced by the NLC at the direction where the phase modulation occurs during the electrical reorientation. In such a case, a NLC of negative dielectric anisotropy is required. The voltage pattern applied to BSD2 has to be scaled accordingly depending on the targeted deflection angle and efficiency.

Different other design strategies may be considered, for example to keep only 1D deflection from either BSD1 or BSD2, or to modulate the transmission efficiency, or to split incident light into several transmitted and deflected output channels. The latter case can easily be implemented by considering rotated polarization or by relative rotation of BSD1 and BSD2 according the specific LC type, anchoring conditions and reorientation mechanism.

The invention has been described with reference to a particular embodiment, but several variants are possible. For instance, different individual LC compounds or mixtures of several compounds of any molecular structure that exhibit one or more LC phases with temperature change (Nematic, Smectic etc) and possess different physical properties such as different values of elastic constants, rotational viscosity, dielectric anisotropy, birefringence etc. may be considered as tunable materials. The LC may be infiltrated into the device by a capillary action in its isotropic liquid phase or under vacuum infiltration. Moreover, the invention may be implemented for phase only and/or amplitude modulation. For the latter case, the device must be placed between a polarizer and an analyzer. For the solid metasurface, any optically transparent and conductive material may be used, an example is the highly doped n-doped GaN but doped polymers, or transparent conductive oxides such as, but not limited to, ITO, for instance, may also be employed. Different materials than those specifically mentioned can be used for the dielectric substrates. Similarly, dimensions for H, P and W and an operating wavelength have been provided as non-limiting examples only. Moreover, the device may operate at environmental or other temperatures.

In some applications, electric substrates DS, DCW need not to be planar; for instance, DS may have a convex upper surface and DCW a concave lower surface, delimitating a curved, shell-like space. Conducting rails need not being perfectly rectilinear and equally spaced but need to ensure the high quality of LC alignment prior to the voltage application. To do so, specific (photo-)chemical or mechanical treatment may be considered to the associated materials to control the alignment properties of the NLC at the interfaces.

List of Reference signs

- PG: Protective glassRV0: Reference electrode corresponding to a voltage input V0
- LC: Liquid crystal
- BS: Bottom substrate
- PV0: Pixelated electrode corresponding to a voltage input V0
- PV1: Pixelated electrode corresponding to a voltage input V1
- PV2: Pixelated electrode corresponding to a voltage input V2
- PV3: Pixelated electrode corresponding to a voltage input V3
- LB: Light beam
- VOFF: Voltage off
- VON: Voltage on corresponding to maximum voltage value
- EL: Electrode
- SB: Substrate
- LCI: LC initial state (voltage off)
- LCF: LC final state (maximum voltage on)
- VEL: Vertical electrode
- DCW: Dielectric cover window
- DS: Dielectric substrate
- IB: Incident beam
- DB: Deflected beam
- LC0: Liquid crystal cell where the polarized light impinging on it experiences the ordinary refractive index $n_o$
- LC1: Liquid crystal cell corresponding where the polarized light impinging on it experiences an refractive index $n_{eff}^1$ where, $n_0 < n_{eff}^1 < n_e$
- LC2: Liquid crystal cell where the polarized light impinging on it experiences an refractive index $n_{eff}^2$ where, $n_0 < n_{eff}^1 < n_{eff}^2 < n_e$
- LC3: Liquid crystal cell where the polarized light impinging on it experiences the extraordinary refractive index $n_e$
- DCB: Driving circuit board
- VIC: Voltage input channels
- DAA: Device active area
- LCC: Liquid crystal cell
- TCR: Transparent conductingrail
- ELI: Electrical inter-connections
- LS: Light source
- ILB: Incident light beam
- DLB1: Deflected light beam in xy plane
- DLB2: Deflected light beam in yz plane
- H: Height (or thickness)
- W: Width
- P: Pitch (or period)
- G: Gap or width of liquid crystal cells
- d: Distance
- SC, SC1, SC2, SCN: Supercells

References

[Kim 20] Y. Kim et al. "Large-area liquid crystal beam deflector with wide steering angle" Appl. Opt. 59, 24, 7462-7468 (2020).
[Li19] S-Q Li et al., "Phase-only transmissive spatial light modulator based on tunable dielectric metasurface" Science 364, 6445, 1087-1090 (2019).
[Yu 11] N Yu, & al., Light Propagation with Phase Discontinuities: Generalized Laws of Reflection and Refraction, Science 334 (6054), 333-337 (2011)

**Claims**

1. An active beam-steering device (BSD) comprising:

   - a dielectric substrate (DS) and a dielectric cover window (DCW), transparent at one optical wavelength $\lambda$, defining a space between them;
   - a plurality of conducting rails ($V_0$ - $V_N$), transparent at said optical wavelength, extending parallel to each other between said dielectric surfaces, so as to divide said space into a plurality of elongated cells (LCC);
   - a nematic liquid crystal (LC) filling said elongated cells; and
   - a plurality of electrical interconnections (ELI) suitable to apply an electric potential ($V_0$ - $V_N$) to each one of said conducting rails;

   wherein:

   - the pitch P of said conducting rails is smaller than said optical wavelength $\lambda$; and
   - the height H of said conducting rails is at least equal to $\lambda/\Delta n$, $\Delta n$ being the birefringence of the liquid crystal at said optical wavelength.

2. The beam-steering device of claim 1 wherein the width W of said conducting rails is sufficiently small, compared to their pitch P, to allow confining light at said wavelength $\lambda$ in the liquid crystal filling said elongated cells.

3. The beam-steering device of any one of the preceding claims wherein $P=\lambda/2 \pm \lambda X$, where P is the pixel size, $\lambda$ is the optical wavelength and X is comprised between 0 and 40%.

4. The beam-steering device of any one of the preceding claims wherein pitch P is in the sub-micrometer range.

5. The beam-steering device of any one of the preceding claims wherein the conducting rails are made of Si-doped GaN.

6. The beam-steering device of any one of the preceding claims further comprising an electronic driving circuit board (DCB) configured for applying variable electric potential values to said conducting rails through said electrical interconnections, an electric potential difference between two adjacent conducting rails determining a phase-shift of light at wavelength $\lambda$ introduced by the cell delimitated by said rails.

7. The beam-steering device of claim 6, wherein said electronic controller is configured for applying to said rails a spatially periodic pattern of electric potentials such that the electric potential difference between two adjacent rails varies monotonically between zero and a maximum value, the maximum value being such that the phase-shift of light at wavelength $\lambda$ in-

troduced by the corresponding cell is equal to $2\pi$.

8. The beam-steering device of claim 7, wherein said electronic controller is configured for varying a deflection angle of a light beam at wavelength $\lambda$ by varying the spatial period of said pattern.

9. A bi-dimensional beam-steering apparatus (BSA) comprising a first (BSD1) and a second (BSD2) beam-steering devices according to any of the preceding devices, suitable to operate at a same optical wavelength $\lambda$, arranged in such a way that a light beam (LB) traversing the first beam-steering device impinges onto the second beam-steering device, the first and second beam-steering devices having conducting rails extending along nonparallel, and preferably perpendicular, directions.

10. An optical system comprising a light source (LS) and either a beam-steering device (BSD) according to any one of claims 1 to 8 or a beam-steering apparatus (BSA) according to claim 9, the light source being configured for directing a light beam (LB) at optical wavelength $\lambda$ towards said beam-steering device or apparatus.

**Patentansprüche**

1. Aktive Strahllenkungsvorrichtung (BSD), umfassend:

   - ein dielektrisches Substrat (DS) und ein dielektrisches Abdeckungsfenster (DCW), das bei einer optischen Wellenlänge $\lambda$ transparent ist, die einen Raum zwischen diesen definieren;
   - eine Vielzahl von leitenden Schienen ($V_0$ - $V_N$), die bei der optischen Wellenlänge transparent sind, die sich parallel zueinander zwischen den dielektrischen Oberflächen erstrecken, um den Raum in eine Vielzahl von länglichen Zellen (LCC) zu teilen;
   - einen nematischen Flüssigkristall (LC), der die länglichen Zellen füllt; und
   - eine Vielzahl von elektrischen Verbindungen (ELI), die geeignet sind, um ein elektrisches Potenzial ($V_0$ - $V_N$) an jeder der leitenden Schienen anzuwenden;

   wobei:

   - der Abstand P der leitenden Schienen kleiner als die optische Wellenlänge $\lambda$ ist; und
   - die Höhe H der leitenden Schienen mindestens gleich $\lambda/\Delta n$ ist, $\Delta n$ die Doppelbrechung des Flüssigkristalls bei der optischen Wellenlänge ist.

2. Strahllenkungsvorrichtung nach Anspruch 1, wobei die Breite W der leitenden Schienen im Vergleich zu ihrem Abstand P ausreichend klein ist, um Licht bei der Wellenlänge $\lambda$ in dem Flüssigkristall einzuschliessen, der die länglichen Zellen füllt.

3. Strahllenkungsvorrichtung nach einem der vorstehenden Ansprüche, wobei P=$\lambda/2 \pm \lambda$X, wobei P die Pixelgröße ist, $\lambda$ die optische Wellenlänge ist und X zwischen 0 und 40 % einbegriffen ist.

4. Strahllenkungsvorrichtung nach einem der vorstehenden Ansprüche, wobei der Abstand P in dem Sub-Mikrometer-Bereich liegt.

5. Strahllenkungsvorrichtung nach einem der vorstehenden Ansprüche, wobei die leitenden Schienen aus Si-dotiertem GaN hergestellt sind.

6. Strahllenkungsvorrichtung nach einem der vorstehenden Ansprüche, ferner umfassend eine elektronische Ansteuerplatine (DCB), die zum Anlegen von variablen elektrischen Potentialwerten an die leitenden Schienen durch die elektrischen Verbindungen konfiguriert ist, wobei eine elektrische Potenzialdifferenz zwischen zwei benachbarten leitenden Schienen eine Phasenverschiebung von Licht bei der Wellenlänge $\lambda$ bestimmt, die durch die Zelle eingeführt wird, die durch die Schienen begrenzt wird.

7. Strahllenkungsvorrichtung nach Anspruch 6, wobei die elektronische Steuerung konfiguriert ist, um auf die Schienen ein räumlich periodisches Muster elektrischer Potentiale anzulegen, derart, dass die elektrische Potentialdifferenz zwischen zwei benachbarten Schienen zwischen null und einem Maximalwert monoton variiert, wobei der Maximalwert derart ist, dass die Phasenverschiebung von Licht bei der Wellenlänge $\lambda$, die durch die entsprechende Zelle eingeführt wird, gleich $2\pi$ ist.

8. Strahllenkungsvorrichtung nach Anspruch 7, wobei die elektronische Steuerung zum Variieren eines Ablenkwinkels eines Lichtstrahls bei der Wellenlänge $\lambda$ durch Variieren der räumlichen Periode des Musters konfiguriert ist.

9. Zweidimensionale Strahllenkungseinrichtung (BSA), umfassend eine erste (BSD1) und eine zweite (BSD2) Strahllenkungsvorrichtung gemäß einer der vorstehenden Vorrichtungen, die geeignet sind, um mit einer gleichen optischen Wellenlänge $\lambda$ zu arbeiten, die derart angeordnet sind, dass ein Lichtstrahl (LB), der die erste Strahllenkungsvorrichtung durchquert, auf die zweite Strahllenkungsvorrichtung trifft, wobei die erste und die zweite Strahllenkungsvorrichtung leitende Schienen aufweisen, die sich entlang nicht paralleler und vorzugsweise senkrechter Richtungen erstrecken.

**10.** Optisches System, umfassend eine Lichtquelle (LS) und entweder eine Strahllenkungsvorrichtung (BSD) nach einem der Ansprüche 1 bis 8 oder eine Strahllenkungseinrichtung (BSA) nach Anspruch 9, wobei die Lichtquelle zum Leiten eines Lichtstrahls (LB) bei der optischen Wellenlänge λ zu der Strahllenkungsvorrichtung oder der -Einrichtung hin konfiguriert ist.

**Revendications**

**1.** Dispositif d'orientation de faisceau (BSD) actif comprenant :

- un substrat diélectrique (DS) et une fenêtre de couverture diélectrique (DCW), transparent à une longueur d'onde optique λ, définissant un espace entre eux ;
- une pluralité de rails conducteurs ($V_0$ - $V_N$), transparents à ladite longueur d'onde optique, s'étendant parallèlement l'un à l'autre entre lesdites surfaces diélectriques, de manière à diviser ledit espace en une pluralité de cellules allongées (LCC) ;
- un cristal liquide (LC) nématique remplissant lesdites cellules allongées ; et
- une pluralité d'interconnexions électriques (ELI) aptes à appliquer un potentiel électrique ($V_0$ - $V_N$) à chacun desdits rails conducteurs ;

dans lequel :

- le pas P desdits rails conducteurs est inférieur à ladite longueur d'onde optique λ ; et
- la hauteur H desdits rails conducteurs est au moins égale à λ/Δn, Δn étant la biréfringence du cristal liquide à ladite longueur d'onde optique.

**2.** Dispositif d'orientation de faisceau selon la revendication 1, dans lequel la largeur W desdits rails conducteurs est suffisamment petite, par rapport à leur pas P, pour permettre de confiner la lumière à ladite longueur d'onde λ dans le cristal liquide remplissant lesdites cellules allongées.

**3.** Dispositif d'orientation de faisceau selon l'une quelconque des revendications précédentes, dans lequel P=λ/2 ± λX, où P est la taille de pixel, λ est la longueur d'onde optique et X est compris entre 0 et 40 %.

**4.** Dispositif d'orientation de faisceau selon l'une quelconque des revendications précédentes, dans lequel le pas P est dans la plage sub-micrométrique.

**5.** Dispositif d'orientation de faisceau selon l'une quelconque des revendications précédentes, dans lequel les rails conducteurs sont en GaN dopé au Si.

**6.** Dispositif d'orientation de faisceau selon l'une quelconque des revendications précédentes, comprenant en outre une carte de circuit d'attaque (DCB) électronique configurée pour appliquer des valeurs de potentiel électrique variables auxdits rails conducteurs par le biais desdites interconnexions électriques, une différence de potentiel électrique entre deux rails conducteurs adjacents déterminant un déphasage de lumière à la longueur d'onde λ introduite par la cellule délimitée par lesdits rails.

**7.** Dispositif d'orientation de faisceau selon la revendication 6, dans lequel ledit dispositif de commande électronique est configuré pour appliquer, auxdits rails, un motif spatialement périodique de potentiels électriques de telle sorte que la différence de potentiel électrique entre deux rails adjacents varie de manière monotone entre zéro et une valeur maximale, la valeur maximale étant telle que le déphasage de la lumière à la longueur d'onde λ introduite par la cellule correspondante est égal à 2π.

**8.** Dispositif d'orientation de faisceau selon la revendication 7, dans lequel ledit dispositif de commande électronique est configuré pour faire varier un angle de déflexion d'un faisceau lumineux à la longueur d'onde λ en faisant varier la période spatiale dudit motif.

**9.** Appareil d'orientation de faisceau (BSA) bidimensionnel comprenant un premier (BSD1) et un second (BSD2) dispositifs d'orientation de faisceau selon l'un quelconque des dispositifs précédents, aptes à fonctionner à une même longueur d'onde optique λ, agencés de telle sorte qu'un faisceau lumineux (LB) traversant le premier dispositif d'orientation de faisceau percute sur le second dispositif d'orientation de faisceau, les premier et second dispositifs d'orientation de faisceau ayant des rails conducteurs s'étendant le long d'orientations non parallèles, et de préférence perpendiculaires.

**10.** Système optique comprenant une source de lumière (LS) et soit un dispositif d'orientation de faisceau (BSD) selon l'une quelconque des revendications 1 à 8, soit un appareil d'orientation de faisceau (BSA) selon la revendication 9, la source de lumière étant configurée pour orienter un faisceau lumineux (LB) à la longueur d'onde optique λ vers ledit dispositif ou appareil d'orientation de faisceau.

Figure 1

Figure 2

Figure 3

Figure 4

Figure 5

Figure 6

Figure 7A

Figure 7B

Figure 8

Figure 9

Figure 10

Figure 11

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200303827 A

### Non-patent literature cited in the description

- **Y. KIM et al.** Large-area liquid crystal beam deflector with wide steering angle. *Appl. Opt.,* 2020, vol. 59 (24), 7462-7468
- **S-Q LI et al.** Phase-only transmissive spatial light modulator based on tunable dielectric metasurface. *Science,* 2019, vol. 364 (6445), 1087-1090
- **N YU.** Light Propagation with Phase Discontinuities: Generalized Laws of Reflection and Refraction. *Science,* 2011, vol. 334 (6054), 333-337